# EUROPÄISCHE PATENTSCHRIFT

(11) **EP 2 560 573 B1**
(45) Veröffentlichungstag und Bekanntmachung des Hinweises auf die Patenterteilung: **17.01.2018**
(21) Anmeldenummer: 11718288.1
(22) Anmeldetag: 19.04.2011
(51) Int. Cl.: A61C 13/20, F27B 17/02, F27D 17/00, F27D 99/00

(54) **BRENNOFEN MIT THERMOELEKTRISCHEM ELEMENT**
FIRING FURNACE WITH THERMOELECTRIC ELEMENT
FOUR DE CUISSON POURVU D'UN ÉLÉMENT THERMOÉLECTRIQUE

(30) Priorität: 21.04.2010 DE 202010005938 U
(43) Veröffentlichungstag der Anmeldung: 27.02.2013
(73) Patentinhaber: Dekema Dental-Keramiköfen GmbH, 83395 Freilassing (DE)
(72) Erfinder: MILLER, Stephan, 83278 Traunstein (DE)
(74) Vertreter: Manitz Finsterwald Patentanwälte PartmbB
(86) Internationale Anmeldenummer: PCT/EP2011/001994
(87) Internationale Veröffentlichungsnummer: WO 2011/131350

(56) Entgegenhaltungen:
- EP-A1- 1 650 519
- US-A- 6 019 098
- US-A1- 2006 172 245

## Beschreibung

Die vorliegende Erfindung betrifft einen Brennofen für Zahnersatz oder Zahnteilersatz mit einer Brennkammer, zumindest einem Heizelement zum Aufheizen der Brennkammer, einer Steuereinheit zur Steuerung des Betriebs des Brennofens und einem die Brennkammer zumindest teilweise umgebenden Gehäuse.

Wichtig ist bei Brennöfen der genannten Art (z.B. EP 1 650 519) u.a. die Fähigkeit zur Erzeugung von hohen Temperaturen insbesondere gemäß vorgegebener Temperaturprofile und die präzise Aufrechterhaltung der Brenntemperatur über die erforderliche Brenndauer, um eine hohe Qualität des zu brennenden Zahnersatzes oder Zahnteilersatzes zu gewährleisten. Neben den vorstehend genannten Anforderungen sollen moderne Brennöfen außerdem möglichst effizient arbeiten, um die Betriebskosten gering zu halten. Derartige Brennöfen werden im Wesentlichen in allen Regionen der Welt eingesetzt und müssen daher auch unter erschwerten Bedingungen stets zuverlässig funktionsfähig sein.

Üblicherweise wird die für den Betrieb des Brennofens notwendige Energie aus einem Stromnetz bezogen, das allerdings in vielen Fällen - gerade in Schwellen- oder Entwicklungsländern - starken Schwankungen unterliegt. Ohne zusätzliche Schutzmaßnahmen führt ein Ausfall des Stromnetzes zu einem Ausfall der Steuereinheit, was zur Folge hat, dass zum einen weder die Heizelemente mit Strom versorgt werden, zum anderen kann nicht mehr überwacht werden, wie sich die Temperatur im Inneren der Brennkammer entwickelt. Wenn sich das Stromnetz wieder normalisiert, führt dies herkömmlicherweise dazu, dass die Steuereinheit wieder in Gang gesetzt wird und auf Grundlage der dann wieder überwachten Temperatur im Inneren der Brennkammer den Brennprozess fortsetzt. Es ist in dieser Situation nicht klar, wie lange der Brennprozess unterbrochen wurde und wie sich die Temperatur im Inneren der Brennkammer während der Unterbrechung der Stromversorgung entwickelt hat. Es besteht daher keine Kontrolle darüber, ob das zu brennende Brenngut tatsächlich Bedingungen ausgesetzt war, die noch eine Fortsetzung des Brennprozesses gestatten, ohne dass qualitative Einbußen bei dem Endprodukt zu erwarten sind. Dem Bedienpersonal bleibt in dieser Situation nur die Wahl - wenn die Unterbrechung des Stromnetzes überhaupt bemerkt wurde -, das Brenngut stets als Ausschuss zu behandeln oder es trotz Qualitätsbedenken als fertiges Endprodukt einzustufen.

Eine Lösung der vorstehend skizzierten Problematik ist eine Bereitstellung einer herkömmlichen unterbrechungsfreien Stromversorgung (USV). Allerdings sind derartige USV-Einrichtungen sehr teuer und stellen daher in vielen Fällen keine gangbare Alternative dar.

Der Erfindung liegt die Aufgabe zugrunde, einen Brennofen der genannten Art anzugeben, der auf effiziente Art und Weise eine zuverlässige Herstellung von Zahnersatz oder Zahnteilersatz ermöglicht.

Diese Aufgabe wird durch einen Brennofen mit den Merkmalen des Anspruchs 1 gelöst.

Der Brennofen weist erfindungsgemäß zumindest ein thermoelektrisches Element zur Nutzung der durch den Brennofen erzeugten Abwärme auf. Mit anderen Worten wird die bisher ungenutzt abgegebene Abwärme des Brennofens durch zumindest ein thermoelektrisches Element in elektrische Energie umgewandelt, die anschließend weiter genutzt werden kann. Geeignete thermoelektrische Elemente basieren beispielsweise auf dem Seebeck-Effekt, wonach sich zwischen zwei Punkten eines elektrischen Leiters, die unterschiedlichen Temperaturen ausgesetzt sind, eine elektrische Spannung ausbildet. Bezogen auf den Brennofen kann die zur Ausnutzung des Seebeck-Effekts notwendige Temperaturdifferenz durch den Temperaturunterschied zwischen der Umgebung des Brennofens und dem Brennofen bereitgestellt werden.

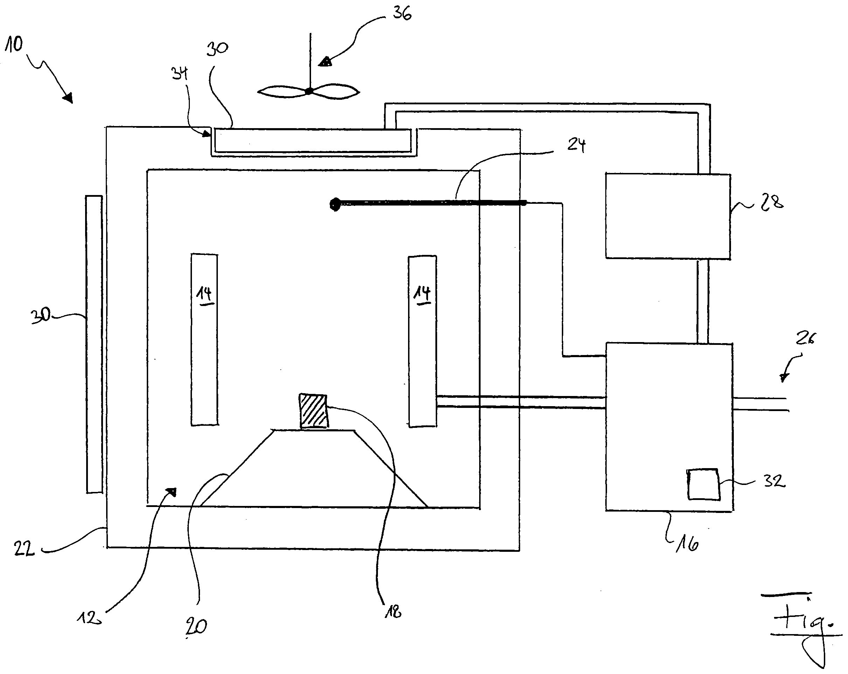

Geeignete thermoelektrische Elemente sind robust, können in unterschiedlichen Größen und Geometrien gefertigt werden und sind vergleichsweise kostengünstig. Außerdem sind im Bereich von Brennöfen der genannten Art hinreichend große Temperaturdifferenzen vorzufinden, sodass eine effiziente Nutzung des thermoelektrischen Effekts möglich ist. Weitere Ausführungsformen der Erfindung sind in den Unteransprüchen, der Beschreibung und der Zeichnung angegeben.

Gemäß einer vorteilhaften Ausführungsform ist die bei Betrieb des Brennofens durch das thermoelektrische Element erzeugte Energie der Steuereinheit und/oder dem elektrischen Heizelement zuführbar. Dies bedeutet, dass der Energiebedarf der genannten Funktionseinheiten ganz oder zumindest teilweise durch die Abwärme des Ofens sichergestellt werden kann.

Es kann ein Energiespeicher vorgesehen sein, der mit dem thermoelektrischen Element sowie mit der Steuereinheit und/oder dem elektrischen Heizelement elektrisch verbindbar ist. Dies ermöglicht eine Pufferung/Zwischenspeicherung der durch das thermoelektrische Element erzeugten Energie.

Insbesondere in Regionen, in denen eine externe Energieversorgung des Brennofens (zum Beispiel durch ein Stromnetz) Instabilitäten aufweist, ist es vorteilhaft, wenn die Steuereinheit einen Steuerabschnitt aufweist, der dazu ausgebildet ist, bei Ausfall der externen Energieversorgung eine Verbindung zwischen dem Energiespeicher und der Steuereinheit und/oder dem Heizelement herzustellen. Der Steuerabschnitt kann dadurch die Funktionsfähigkeit zumindest einiger wesentlicher Funktionen der Steuereinheit sicherstellen und so die Betriebssicherheit des Brennofens gewährleisten. Beispielsweise kann bei einem Ausfall der externen Energieversorgung ein "Notfallprogramm" gestartet werden, das den Brennofen kontrolliert in einen sicheren Betriebsmodus überführt und/oder geeignete Hinweis-/Warnmeldungen ausgibt. Insbesondere ist die Verbindung automatisch herstellbar, sodass ein Eingreifen eines Benutzers nicht zwingend erforderlich ist.

Alternativ oder zusätzlich kann die Steuereinheit einen Steuerabschnitt aufweisen, der dazu ausgebildet ist, bei Erreichen eines Schwellenwertes zumindest eines der Betriebsparameter des Brennofens eine direkte Verbindung zwischen dem thermoelektrischen Element und der Steuereinheit und/oder dem Heizelement herzustellen, wobei die Verbindung insbesondere automatisch herstellbar ist. Der Schwellenwert kann beispielsweise so gewählt sein, dass die genannte direkte Verbindung dann automatisch hergestellt wird, wenn der Brennofen eine bestimmte Temperatur überschreitet, sodass das thermoelektrische Element ausreichend Energie für den Betrieb der Steuereinheit - oder bestimmter Funktionen der Steuereinheit - liefert. Die direkte Verbindung kann auch in Abhängigkeit eines Ladezustands des Energiespeichers hergestellt werden. Es ist auch möglich, Kombinationen von unterschiedlichen Betriebsparametern vorzusehen, die jeweils bestimmte Schwellenwerte erreichen müssen, bevor die direkte Verbindung hergestellt wird.

Abweichend von den vorstehend skizzierten Ausführungsformen ist es auch denkbar, dass die Steuereinheit permanent mit dem Energiespeicher und/oder dem Heizelement in Verbindung steht, um bei einem Ausfall einer externen Energieversorgung des Brennofens zumindest einen eingeschränkten Betrieb zu gewährleisten, ohne dass ein Umschalten zwischen verschiedenen "Energieversorgungsmodi" erforderlich ist. Die Energieversorgung der Steuereinheit erfolgt somit immer über den Energiespeicher, der wiederum mit einer externen Energiequelle in Verbindung steht.

Die Steuereinheit kann einen Steuerabschnitt aufweisen, der dazu ausgebildet ist, bei Ausfall einer externen Stromversorgung des Brennofens unter Rückgriff auf die von dem thermoelektrischen Element erzeugte Energie in einem eingeschränkten Betriebszustand den Zustand des Brennofens zu überwachen und bei Wiederherstellung der externen Energieversorgung einen vollständigen Betrieb des Brennofens kontrolliert wieder aufzunehmen. Unter einem vollständigen Betrieb ist nicht unbedingt ein zu dem vor dem Versorgungsausfall identischer Betrieb zu verstehen. Es soll vielmehr zum Ausdruck kommen, dass - im Gegensatz zu einem eingeschränkten Betrieb des Brennofens - bei einem vollständigen Betrieb grundsätzlich eine volle Funktionalität des Brennofens aufgrund ausreichender Energieversorgung gesichert ist.

Beispielsweise in Ländern mit stark variierenden Netzspannungen und/ oder vergleichsweise häufigen Netzausfällen kann durch den Steuerabschnitt eine Art "Notfallprogramm" ausgeführt werden, das während einer ungenügenden Versorgung des Brennofens mit externer Energie den Zustand des Ofens, insbesondere den Temperaturverlauf im Inneren des Ofens, überwacht und/oder protokolliert. Die Ausführung des Notfallprogramms kann vorteilhafterweise automatisch durch den Steuerabschnitt in Gang gesetzt werden.

Die gewonnenen Überwachungsdaten können genutzt werden, um zu entscheiden, ob der laufende Brennprozess abgebrochen werden muss oder ob er nach Wiederherstellung der externen Energieversorgung weitergeführt werden kann - eventuell mit modifizierten Parametern (Brenndauer, Temperaturprofil, ...) -, ohne dass der zu brennende Zahnersatz oder Zahnteilersatz qualitative Einbußen erleidet. Es versteht sich, dass der Steuerabschnitt auch Warnmeldungen unterschiedlichster Art ausgeben kann, um das Bedienungspersonal auf den Ausfall der externen Energieversorgung hinzuweisen und die Einleitung entsprechender Gegenmaßnahmen zu ermöglichen.

Bevorzugt ist das thermoelektrische Element an dem Gehäuse angeordnet oder in das Gehäuse integriert. Eine thermische Dämmung des Gehäuses kann im Bereich des thermoelektrischen Elements relativ zu anderen Bereichen des Gehäuses weniger stark isolierend ausgeführt, insbesondere ausgespart sein, um bei Betrieb des Brennofens einen thermischen Gradient zwischen dem Gehäuse und der Umgebung zu erzeugen, der für eine effektive thermoelektrische Energieerzeugung geeignet ist. Insbesondere weist das Gehäuse eine Ausnehmung auf, in der das thermoelektrische Element zumindest teilweise angeordnet ist.

Zur Erzeugung eines geeigneten thermischen Gradienten kann eine Kühleinrichtung vorgesehen sein, mit der zumindest eine der Brennkammer abgewandte Seite des thermoelektrischen Elements kühlbar ist.

Es ist darauf hinzuweisen, dass grundsätzlich eine beliebige Anzahl thermoelektrischer Elemente an oder in dem Gehäuse vorgesehen sein kann, um die von dem Brennofen erzeugte Abwärme in vorteilhafter Weise zu nutzen. Beispielsweise können mehrere oder sogar alle Seiten des Gehäuses großflächig mit thermoelektrischen Elementen versehen sein, um die Abwärme möglichst effizient nutzen zu können. Allerdings können auch lediglich einzelne Seiten des Gehäuses teilweise oder vollständig mit thermoelektrischen Elementen versehen sein, wenn beispielsweise nur ein unterbrechungsfreier Betrieb der Steuereinheit für einen relativ kurzen Zeitraum gewährleistet sein soll und Netzschwankungen nur recht selten zu erwarten sind.

Nachfolgend wird eine vorteilhafte Ausführungsform der Erfindung rein beispielhaft unter Bezugnahme auf die beigefügte Zeichnung erläutert.

Die Figur zeigt einen Brennofen 10 mit einer Brennkammer 12, die durch Heizelemente 14 heizbar ist. Die Heizelemente 14 stehen mit einer Steuereinheit 16 in Verbindung, die deren Betrieb steuert, um im Inneren der Brennkammer 12 ein geeignetes Temperaturprofil (Temperatur-ZeitVerlauf) während eines Brennprozesses zu erzeugen. Aus Gründen der Übersichtlichkeit ist lediglich die Verbindung des rechten Heizelements 14 mit der Steuereinheit 16 gezeigt. Die Temperatur im Inneren der Brennkammer 12 wird durch einen Temperatursensor 24 überwacht, der ebenfalls mit der Steuereinheit 16 in Verbindung steht.

Ein in dem Brennofen 10 zu brennendes Brenngut 18 ist auf einem Brenngutträger 20 im Inneren der Brennkammer 12 angeordnet. Die Brennkammer 12 ist von einem Gehäuse 22 umgeben, das eine thermisch isolierende Wirkung aufweist. Das Gehäuse 22 muss in der Lage sein, ses im Inneren der Brennkammer 12 durchaus Temperaturen von ca. 1600°C erreicht werden können, während die Außenseite des Gehäuses 22 in der Regel die Umgebungstemperatur nicht deutlich übersteigen soll, um beispielsweise für das Bedienungspersonal keine Gefahr darzustellen.

Der Brennofen 10 bezieht die zu seinem Betrieb notwendige Energie aus einem externen Stromnetz 26. Um einen zuverlässigen Betrieb des Brennofens 10 auch bei Instabilitäten des Stromnetzes 26 sicherzustellen, umfasst dieser einen Energiespeicher 28, der mit thermoelektrischen Elementen 30 in Verbindung steht (aus Gründen der Übersichtlichkeit ist nur die Verbindung des oberen thermoelektrischen Elements 30 mit dem Energiespeicher 28 gezeigt). Die thermoelektrischen Elemente 30 nutzen die Abwärme des Brennofens 10 zur Stromerzeugung und speisen den erzeugten Strom in den Energiespeicher 28 ein, der bei Bedarf - etwa bei Ausfall des Stromnetzes 26 - die Steuereinheit 16 zumindest teilweise funktionsfähig hält.

Die Steuereinheit 16 umfasst einen Überwachungsabschnitt 32, der den Ausfall des Stromnetzes 26 erkennt, beispielsweise indem ein Unterschreiten eines Schwellenwerts der Netzspannung erkannt wird, und automatisch eine Verbindung des Energiespeichers 28 mit der Steuereinheit 16 herstellt, um zumindest den Temperatursensor 24 weiter zu betreiben und die ermittelten Temperaturdaten in einem Datenspeicher zu hinterlegen. Je nach Dimensionierung des Energiespeichers 28 kann auch eine - ggf. teilweise - Aufrechterhaltung des Betriebs der Heizelemente 14 vorgesehen sein, beispielsweise um kritische Temperaturschwellen im Inneren der Brennkammer 12 nicht zu unterschreiten. Die Steuereinheit 16 kann somit zumindest einen "Notfallbetrieb" aufrecht erhalten und den Zustand des Brennofens 10 und insbesondere die Temperatur im Inneren der Brennkammer 12 protokollieren, damit überprüft werden kann, ob das Brenngut 18 als Ausschussware zu behandeln ist oder nicht.

Alternativ zu der gezeigten Ausführungsform kann der Energiespeicher 28 auch permanent mit der Steuereinheit 16 verbunden sein. Es ist auch möglich, dass die Versorgung mit externer Energie über den Energiespeicher 28 erfolgt.

Die Versorgung der Steuereinheit 16 mit ausreichender Energie während des Ausfalls des Stromnetzes 26 ermöglicht nach Wiederherstellung der Stromversorgung auch die Wiederaufnahme des Brennprozesses, wobei auf die protokollierten Zustandsdaten zurückgegriffen werden kann, um die Wiederaufnahme des Brennprozesses optimal zu gestalten. Zu diesem Zweck können in der Steuereinheit 16 entsprechende Parametersätze hinterlegt sein. Die Parametersätze enthalten für realistischerweise zu erwartende Problemfälle/Unterbrechungsszenarien jeweils eine Reihe von Betriebsparametern, die ein kontrolliertes Hochfahren des Brennofens 10 und eine an die jeweils vorliegende Situation angepasste Fortführung des Brennprozess ermöglichen. D.h. auf Basis der protokollierten Messwerte und der hinterlegten Parametersätze werden einzelne oder mehrere Parameter des Brennprozesses modifiziert, um trotz dessen Unterbrechung ein fehlerfreies Brenngut 18 zu erhalten.

Die thermoelektrischen Elemente 30 können, abweichend von der dargestellten Ausführungsform, das Gehäuse 22 im Wesentlichen allseitig umgeben, um die Abwärme des Brennofens 10 noch effizienter zu nutzen. Das Gehäuse 22 kann vorteilhafterweise so ausgestaltet sein, dass an dessen Außenseite eine Temperatur auftritt, die ausreichend hoch ist, um die thermoelektrischen Elemente 30 auf ihrer dem Gehäuse 22 zugewandten Seite hinreichend stark zu erwärmen. Die andere Seite der thermoelektrischen Elemente 30 ist einem kälteren Temperaturniveau zugewandt (Umgebungstemperatur), damit sich der eine Spannung generierende Seebeck-Effekt ausbilden kann.

Besonders effizient ist es, zumindest eine Ausnehmung 34 in dem Gehäuse vorzusehen, in der eines der thermoelektrischen Elemente 30 angeordnet ist. Dieses thermoelektrische Element 30 ist dadurch in das Gehäuse 22 - zumindest teilweise - "integriert". Die thermische Dämmungsfunktion des Gehäuses 22 ist im Bereich der Ausnehmung 34 verringert, damit der für den Betrieb des thermoelektrischen Elements 30 notwendige Temperaturgradient lokal begrenzt zur Verfügung gestellt werden kann, und wird zumindest zum Teil durch die Dämmwirkung des thermoelektrischen Elements 30 ersetzt.

Beispielsweise herrscht an der der Brennkammer 12 zugewandten Seite der thermoelektrischen Elemente 30 eine Temperatur von maximal etwa 300°C, während die der Brennkammer 12 abgewandte Seite der thermoelektrischen Elemente 30 eine Umgebungstemperatur von ca. 30°C aufweist.

Es existieren thermoelektrische Elemente, die bei einer Temperaturdifferenz von 270°C eine Leistung von über 10 Watt erreichen, was in vielen Fällen durchaus zum Betrieb relevanter Funktionsbereiche einer typischen Steuereinheit ausreichend ist. Weiterhin ist es möglich, bei dem Brennofen 10 thermoelektrische Elemente einzusetzen, die neben ihrer thermoelektrischen Wirkung selbst auch als Energiespeicher fungieren.

Um die Ausbildung eines Temperaturunterschieds zwischen den beiden Seiten der thermoelektrischen Elemente 30 zu unterstützen, kann eine Kühleinrictung 36 vorgesehen sein, die in der beigefügten Zeichnung beispielhaft durch einen stilisierten Ventilator dargestellt ist. Es ist allerdings auch möglich - zusätzlich oder alternativ - Kühlrippen und/oder eine Flüssigkeitskühlung vorzusehen.

### Bezugszeichenliste

- 10: Brennofen
- 12: Brennkammer
- 14: Heizelement
- 16: Steuereinheit
- 18: Brenngut
- 20: Brenngutträger
- 22: Gehäuse
- 24: Temperatursensor
- 26: Stromnetz
- 28: Energiespeicher
- 30: thermoelektrisches Element
- 32: Überwachungsabschnitt
- 34: Ausnehmung
- 36: Kühleinrichtung

## Patentansprüche

1. Brennofen für Zahnersatz oder Zahnteilersatz mit einer Brennkammer (12), zumindest einem elektrischen Heizelement (14) zum Aufheizen der Brennkammer (12), einer Steuereinheit (16) zur Steuerung des Betriebs des Brennofens und einem die Brennkammer (12) zumindest teilweise umgebenden Gehäuse (22),
**dadurch gekennzeichnet, dass**
der Brennofen zumindest ein thermoelektrisches Element (30) zur Nutzung der durch den Brennofen erzeugten Abwärme umfasst.

2. Brennofen nach Anspruch 1,
**dadurch gekennzeichnet, dass**
die bei Betrieb des Brennofens durch das thermische Element (30) erzeugte Energie der Steuereinheit (16) und/oder dem Heizelement (14) zuführbar ist.

3. Brennofen nach Anspruch 1 oder 2,
**dadurch gekennzeichnet, dass**
ein Energiespeicher (28) vorgesehen ist, der mit dem thermoelektrischen Element (30) sowie mit der Steuereinheit (16) und/oder dem Heizelement (14) elektrisch verbindbar ist.

4. Brennofen nach zumindest einem der vorhergehenden Ansprüche,
**dadurch gekennzeichnet, dass**
die Steuereinheit (16) einen Steuerabschnitt (32) aufweist, der dazu ausgebildet ist, bei Ausfall einer externen Energieversorgung (26) eine Verbindung zwischen dem Energiespeicher (28) und der Steuereinheit (16) und/oder dem Heizelement (14) herzustellen, wobei die Verbindung insbesondere automatisch herstellbar ist.

5. Brennofen nach zumindest einem der vorhergehenden Ansprüche,
**dadurch gekennzeichnet, dass**
die Steuereinheit (16) einen Steuerabschnitt (32) aufweist, der dazu ausgebildet ist, bei Erreichen eines Schwellenwertes eines Betriebsparameters des Brennofens eine direkte Verbindung zwischen dem thermoelektrischen Element (30) und der Steuereinheit (16) und/oder dem Heizelement (14) herzustellen, wobei die Verbindung insbesondere automatisch herstellbar ist.

6. Brennofen nach zumindest einem der Ansprüche 1 bis 3,
**dadurch gekennzeichnet, dass**
die Steuereinheit (16) und/oder das Heizelement (14) permanent mit dem Energiespeicher (28) in Verbindung stehen.

7. Brennofen nach zumindest einem der vorhergehenden Ansprüche,
**dadurch gekennzeichnet, dass**
die Steuereinheit (16) einen Steuerabschnitt (32) aufweist, der dazu ausgebildet ist, bei Ausfall einer externen Energieversorgung (26) des Brennofens unter Rückgriff auf die von dem thermoelektrischen Element (30) erzeugte Energie in einem eingeschränkten Betriebszustand den Zustand des Brennofens zu überwachen und bei Wiederherstellung der externen Energieversorgung (26) einen vollständigen Betrieb des Brennofens kontrolliert wieder aufzunehmen.

8. Brennofen nach zumindest einem der vorhergehenden Ansprüche,
**dadurch gekennzeichnet, dass**
das thermoelektrische Element (30) an dem Gehäuse (22) angeordnet ist oder in das Gehäuse (22) integriert ist.

9. Brennofen nach Anspruch 8,
**dadurch gekennzeichnet, dass**
eine thermische Dämmung des Gehäuses (22) im Bereich des thermoelektrischen Elements (30) relativ zu anderen Bereichen des Gehäuses (22) weniger stark isolierend ausgeführt, insbesondere ausgespart ist.

10. Brennofen nach Anspruch 8 oder 9,
**dadurch gekennzeichnet, dass**
das Gehäuse (22) eine Ausnehmung (34) aufweist, in der das thermoelektrische Element (30) zumindest teilweise angeordnet ist.

11. Brennofen nach zumindest einem der vorhergehenden Ansprüche,
**dadurch gekennzeichnet, dass**
eine Kühleinrichtung (36) vorgesehen ist, mit der zumindest eine der Brennkammer (12) abgewandte Seite des thermoelektrischen Elements (30) kühlbar ist.

## Claims

1. A furnace for dental prostheses or partial dental prostheses having a firing chamber (12), at least one electric heating element (14) for heating the firing chamber (12), a control unit (16) for controlling the operation of the furnace and a housing (22) at least partly surrounding the firing chamber (12),
**characterized in that**
the furnace comprises at least one thermoelectric element (30) for utilizing the waste heat generated by the furnace.

2. A furnace in accordance with claim 1,
**characterized in that**
the energy generated by the thermal element (30) in operation of the furnace can be supplied to the control unit (16) and/or to the heating element (14).

3. A furnace in accordance with claim 1 or claim 2,
**characterized in that**
an energy store (28) is provided which can be electrically connected to the thermoelectric element (30) and to the control unit (16) and/or to the heating element (14).

4. A furnace in accordance with at least one of the preceding claims,
**characterized in that**
the control unit (16) has a control section (32) which is configured to establish a connection between the energy store (28) and the control unit (16) and/or the heating element (14) on a failure of an external energy supply (26), with the connection in particular being able to be established automatically.

5. A furnace in accordance with at least one of the preceding claims,
**characterized in that**
the control unit (16) has a control section (32) which is configured to establish a direct connection between the thermoelectric element (30) and the control unit (16) and/or the heating element (14) on the reaching of a threshold value of an operating parameter of the furnace, with the connection in particular being able to be established automatically.

6. A furnace in accordance with at least one of the claims 1 to 3,
**characterized in that**
the control unit (16) and/or the heating element (14) is/are permanently connected to the energy store (28).

7. A furnace in accordance with at least one of the preceding claims,
**characterized in that**
the control unit (16) has a control section (32) which is configured to monitor the state of the furnace in a restricted state of operation on a failure of an external energy supply (26) of the furnace while making use of the energy generated by the thermoelectric element (30) and to restart a complete operation of the furnace in a controlled manner on the restoring of the external energy supply (26).

8. A furnace in accordance with at least one of the preceding claims,
**characterized in that**
the thermoelectric element (30) is arranged at the housing (22) or is integrated into the housing (22).

9. A furnace in accordance with claim 8,
**characterized in that**
a thermal damping of the housing (22) in the region of the thermoelectric element (30) is made less insulating, is in particular recessed, relative to other regions of the housing (22).

10. A furnace in accordance with claim 8 or claim 9,
**characterized in that**
the housing (22) has a cut-out (34) in which the thermoelectric element (30) is at least partly arranged.

11. A furnace in accordance with at least one of the preceding claims,
**characterized in that**
a cooling device (36) is provided with which at least one side of the thermoelectric element (30) remote from the firing chamber (12) can be cooled.

## Revendications

1. Four de cuisson pour une prothèse dentaire ou une prothèse dentaire partielle, comportant une chambre de cuisson (12), au moins un élément de chauffage électrique (14) pour chauffer la chambre de cuisson (12), une unité de commande (16) pour commander le fonctionnement du four de cuisson et un boîtier (22) qui entoure au moins partiellement la chambre de cuisson (12),
**caractérisé en ce que**
le four de cuisson comprend au moins un élément thermoélectrique (30) pour exploiter la chaleur perdue générée par le four de cuisson.

2. Four de cuisson selon la revendication 1,
**caractérisé en ce que**
l'énergie produite par l'élément thermique (30) lors du fonctionnement du four de cuisson est susceptible d'être amenée à l'unité de commande (16) et/ou à l'élément de chauffage (14).

3. Four de cuisson selon la revendication 1 ou 2,
**caractérisé en ce que**
il est prévu un accumulateur d'énergie (28) qui est susceptible d'être connecté électriquement à l'élément thermoélectrique (30) ainsi qu'à l'unité de commande (16) et/ou à l'élément de chauffage (14).

4. Four de cuisson selon l'une au moins des revendications précédentes,
**caractérisé en ce que**
l'unité de commande (16) comprend une portion de commande (32) qui est réalisée pour établir une connexion entre l'accumulateur d'énergie (28) et l'unité de commande (16) et/ou l'élément de chauffage (14) en cas de défaillance d'une alimentation externe en énergie (26), la connexion pouvant être établie en particulier automatiquement.

5. Four de cuisson selon l'une au moins des revendications précédentes,
**caractérisé en ce que**
l'unité de commande (16) comprend une portion de commande (32) qui est réalisée pour établir une connexion directe entre l'élément thermoélectrique (30) et l'unité de commande (16) et/ou l'élément de chauffage (14) lorsqu'une valeur seuil d'un paramètre de fonctionnement du four de cuisson est atteinte, la connexion pouvant être établie en particulier automatiquement.

6. Four de cuisson selon l'une au moins des revendications 1 à 3,
**caractérisé en ce que**
l'unité de commande (16) et/ou l'élément de chauffage (14) est/sont en permanence en connexion avec l'accumulateur d'énergie (28).

7. Four de cuisson selon l'une au moins des revendications précédentes,
**caractérisé en ce que**
l'unité de commande (16) comprend une portion de commande (32) qui est réalisée pour surveiller l'état du four de cuisson, en cas de défaillance d'une alimentation externe en énergie (26), en ayant recours à l'énergie produite par l'élément thermoélectrique (30), dans un état de fonctionnement restreint, et pour rétablir de façon contrôlée un fonctionnement intégral du four de cuisson lors du rétablissement de l'alimentation externe en énergie (26).

8. Four de cuisson selon l'une au moins des revendications précédentes,
**caractérisé en ce que**
l'élément thermoélectrique (30) est agencé sur le boîtier (22) ou intégré dans le boîtier (22).

9. Four de cuisson selon la revendication 8,
**caractérisé en ce que**
une isolation thermique du boîtier (22) dans la zone de l'élément thermoélectrique (30) est réalisée avec un effet isolant moins fort par rapport à d'autres zones du boîtier (22), et elle est en particulier échancrée.

10. Four de cuisson selon la revendication 8 ou 9,
**caractérisé en ce que**
le boîtier (22) présente un évidement (34) dans lequel l'élément thermoélectrique (30) est agencé au moins partiellement.

11. Four de cuisson selon l'une au moins des revendications précédentes,
**caractérisé en ce que**
il est prévu un moyen de refroidissement (36) permettant de refroidir au moins une face de l'élément thermoélectrique (30) détournée de la chambre de cuisson (12).
